# EUROPÄISCHE PATENTANMELDUNG

(11) **EP 4 821 670 A1**
(43) Veröffentlichungstag der Anmeldung: **14.10.2026**
(21) Anmeldenummer: 25169592.0
(22) Anmeldetag: 09.04.2025
(51) Int. Cl.: B32B 3/08, B32B 5/02, B32B 5/30, B32B 7/02, B32B 27/06, B32B 27/12

(54) **VERFAHREN ZUR HERSTELLUNG EINER AKUSTISCH WIRKSAMEN VERBUNDPLATTE, AKUSTISCH WIRKSAME VERBUNDPLATTE**

(71) Anmelder: STO SE & Co. KGaA, 79780 Stühlingen (DE)
(72) Erfinder: Blaskovich, Samuel, 89537 Giengen (DE)
(74) Vertreter: Gottschalk, Matthias

(57) **Zusammenfassung**

Die Erfindung betrifft ein Verfahren zur Herstellung einer akustisch wirksamen Verbundplatte (10) für den Innenausbau, umfassend eine schallabsorbierende Leichtbauplatte (1) und eine strömungsdichte Lage (2). Erfindungsgemäß wird die strömungsdichte Lage (2) in mindestens einem Bereich (A) unmittelbar und in mindestens einem Bereich (B) mittelbar über eine Zwischenlage (3) mit der schallabsorbierenden Leichtbauplatte (1) verbunden.

Ferner betrifft die Erfindung eine akustisch wirksame Verbundplatte (10), die insbesondere nach einem erfindungsgemäßen Verfahren herstellbar ist.

## Beschreibung

Die Erfindung betrifft ein Verfahren zur Herstellung einer akustisch wirksamen Verbundplatte für den Innenausbau. Eine solche Verbundplatte wird auch als Akustikplatte bezeichnet. Darüber hinaus betrifft die Erfindung eine akustisch wirksame Verbundplatte für den Innenausbau, die insbesondere nach einem erfindungsgemäßen Verfahren herstellbar ist.

### Stand der Technik

Aus dem Stand der Technik sind akustisch wirksame Verbundplatten bekannt, die eine schallabsorbierende Leichtbauplatte aus offenporigen Leichtfüllstoffen umfassen. Tritt eine Schallwelle in eine Pore des Leichtfüllstoffs ein, entsteht Reibung, welche die kinetische Energie der Schallwelle in Wärme umwandelt. Die Schallwelle wird auf diese Weise absorbiert. Voraussetzung für die Schallabsorption ist demnach eine gewisse Strömungsoffenheit der Leichtbauplatte. "Strömungsoffen" heißt, dass die Leichtbauplatte durchlässig für Luft ist.

Da die Luft in Innenräumen in der Regel Staubpartikel enthält, wirkt eine in einem Innenraum verbaute strömungsoffene Leichtbauplatte wie ein Filter, der die in der Luft enthaltenen Staubpartikel abfängt. Dies führt über die Zeit zu einer sich auf der Plattenoberfläche abzeichnenden Verschmutzung der Leichtbauplatte.

Um dies zu vermeiden, kann auf die Rückseite der strömungsoffenen Leichtbauplatte eine strömungsdichte, das heißt "nicht luftdurchlässige" Lage aufgebracht werden. Diese wirkt wie eine Art Versiegelung, so dass die Verbundplatte aus strömungsoffener Leichtbauplatte und strömungsdichter Lage für Luft undurchlässig ist. Leider hat sich gezeigt, dass die rückseitige strömungsdichte Lage die akustische Wirksamkeit der Verbundplatte in nicht unerheblichem Maße mindert.

Die vorliegende Erfindung ist mit der Aufgabe befasst, die akustische Wirksamkeit einer Verbundplatte für den Innenausbau, umfassend eine schallabsorbierende Leichtbauplatte und eine strömungsdichte Lage, zu verbessern.

Zur Lösung der Aufgabe wird das Verfahren mit den Merkmalen des Anspruchs 1 vorgeschlagen. Darüber hinaus wird eine akustisch wirksame Verbundplatte angegeben. Vorteilhafte Weiterbildungen der Erfindung sind den jeweiligen Unteransprüchen zu entnehmen.

### Offenbarung der Erfindung

Vorgeschlagen wird ein Verfahren zur Herstellung einer akustisch wirksamen Verbundplatte für den Innenausbau. Die akustisch wirksame Verbundplatte umfasst eine schallabsorbierende Leichtbauplatte und eine strömungsdichte Lage. Erfindungsgemäß wird die strömungsdichte Lage in mindestens einem Bereich A unmittelbar und in mindestens einem Bereich B mittelbar über eine Zwischenlage mit der schallabsorbierenden Leichtbauplatte verbunden.

Bei dem vorgeschlagenen Verfahren wird in mindestens einem Bereich B eine Zwischenlage zwischen der strömungsdichten Lage und der schallabsorbierenden Leichtbauplatte angeordnet, so dass in diesem mindestens einen Bereich B die strömungsdichte Lage nicht direkt mit der schallabsorbierenden Leichtbauplatte verbunden ist. In diesem mindestens einen Bereich B weist die strömungsdichte Lage demnach eine gewisse Beweglichkeit gegenüber der schallabsorbierenden Leichtbauplatte auf. Dies ermöglicht ein Schwingen der strömungsdichten Lage und damit eine Schalltransmission. Die Schalltransmission in dem mindestens einen Bereich B hebt die negativen Wirkungen der in dem mindestens einen Bereich A direkt mit der schallabsorbierenden Leichtbauplatte verbundenen strömungsdichten Lage zumindest in Teilen wieder auf, so dass der Schallabsorptionsgrad und damit die akustische Wirksamkeit der Verbundplatte steigen. Zugleich wird eine akustisch wirksame Verbundplatte geschaffen, die weniger stark zu Verschmutzungen neigt.

Der Schallabsorptionsgrad α definiert das Verhältnis der absorbierten Schallintensität zur gesamten einfallenden Schallintensität. Der Schallabsorptionsgrad α hängt dabei wie folgt vom Schallreflexionsgrad ρ, dem Schalltransmissionsgrad τ und dem Schalldissipationsgrad δ ab: $ρ + α = 1$ $ρ + τ + δ = 1$ $α = τ + δ$

Die absorbierte Schallintensität bzw. der Schallabsorptionsgrad α entspricht demnach der Summe aus durchgelassener bzw. transmittierter und "verlorengegangener" bzw. dissipierter Schallintensität. Um einen hohen Schallabsorptionsgrad α zu erreichen, sollten demzufolge die Schalltransmission und die Schalldissipation möglichst hoch sein. Die Schallreflexion dagegen sollte möglichst gering sein.

Die eingangs beschriebenen negativen Wirkungen einer direkt mit einer schallabsorbierenden Leichtbauplatte verklebten strömungsdichten Lage sind im Wesentlichen darauf zurückzuführen, das die strömungsdichte Lage innerhalb der Verbundplatte eine Schallreflexionsebene ausbildet, so dass der Schallreflexionsgrad ρ steigt. Wird die strömungsdichte Lage jedoch in zumindest einem Bereich B in die Lage versetzt, gegenüber der schallabsorbierenden Leichtbauplatte zu schwingen, werden in diesem Bereich die Schallwellen nicht reflektiert, sondern durchgelassen bzw. transmittiert. Die Schalltransmission in dem mindestens einen Bereich B hebt somit - zumindest in Teilen - die negativen Wirkungen der Schallreflexion in dem mindestens einen Bereich A wieder auf.

Dieser positive Effekt der Schalltransmission steigt mit dem Transmissionsgrad τ bzw. der Beweglichkeit der strömungsdichten Lage in dem mindestens einen Bereich B. Die Beweglichkeit der strömungsdichten Lage hängt unter anderem von den Eigenschaften der Zwischenschicht ab. Auf diese wird weiter unten näher eingegangen. Wie sich überraschenderweise herausgestellt hat, kann der positive Effekt nicht weiter dadurch gesteigert werden, dass der mindestens eine Bereich B eine größere Fläche als der mindestens eine Bereich A einnimmt. Auch darauf wird weiter unten näher eingegangen.

Bei einer erfindungsgemäßen akustisch wirksamen Verbundplatte wird die Zwischenlage lediglich bereichsweise, das heißt in einem oder mehreren Bereichen angeordnet, wobei die mehreren Bereiche zueinander beabstandet sind. In diesem Fall setzt sich die Zwischenlage aus mehreren zueinander beabstandet angeordneten Teilen zusammen. Der Begriff "Zwischenlage" ist demnach nicht so zu verstehen, dass es sich hierbei um ein einziges Teil bzw. ein einziges Flächengebilde handelt.

Gemäß einer bevorzugten Ausführungsform der Erfindung wird die Zwischenlage (bzw. werden die Teile der Zwischenlage) beabstandet zu mindestens einem Randbereich der strömungsdichten Lage angeordnet. In diesem mindestens einen Randbereich, der dann einen Bereich A ausbildet, wird dann die strömungsdichte Lage unmittelbar bzw. direkt mit der schallabsorbierenden Leichtbauplatte verbunden. Dies hat den Vorteil, dass zum einen die Robustheit der Verbundplatte in diesem Randbereich steigt. Zum anderen kann, sofern die strömungsdichte Lage in mindestens zwei sich gegenüberliegenden Randbereichen mit der schallabsorbierenden Leichtbauplatte unmittelbar verbunden wird, die strömungsdichte Lage - analog einer Saite bei einem Streichinstrument - über die Zwischenlage gespannt werden. Die strömungsdichte Lage kann dadurch noch besser schwingen.

Vorzugsweise wird die Zwischenlage umlaufend beabstandet zu den Randbereichen der schallabsorbierenden Leichtbauplatte und der strömungsdichten Lage angeordnet. Die Robustheit der Verbundplatte kann dadurch weiter gesteigert werden. Zudem wird die strömungsdichte Lage umlaufend gleichmäßig über die Zwischenlage gespannt.

Die Randbereiche bilden bevorzugt einen rahmenartigen Bereich A aus, der den mindestens einen Bereich B umlaufend einfasst. Bei mehreren Bereichen B werden diese bevorzugt beabstandet zueinander angeordnet, so dass jeder Bereich B umlaufend durch einen Bereich A eingefasst ist. Der mindestens eine Bereich A erstreckt sich in diesem Fall nicht nur über die Randbereiche der strömungsdichten Lage. Indem jeder Bereich B durch einen Bereich A bzw. den mindestens einen Bereich A eingefasst ist, wird die strömungsdichte Lage optimal über die jeweilige Zwischenlage gespannt. Im Ergebnis kann so die Schalltransmission in den Bereichen B verbessert werden.

Durch die lediglich bereichsweise Anordnung der Zwischenschicht weist die Verbundplatte unterschiedliche Gesamtdicken auf, wobei die Unterschiede - abhängig von der Dicke der Zwischenlage - gering sein können. In dem mindestens einen Bereich A, in dem die strömungsdichte Lage unmittelbar mit der schallabsorbierenden Leichtbauplatte verbunden ist, ist die Gesamtdicke geringer als in dem mindestens einen Bereich B, in dem zwischen der strömungsdichten Lage und der schallabsorbierenden Leichtbauplatte die Zwischenlage angeordnet ist. Da vorzugsweise der mindestens eine Bereich A ein Randbereich ist, ist die Verbundplatte im Randbereich dünner als beispielsweise in einem zum Randbereich beabstandeten Bereich. Ein dünnerer Randbereich wirkt sich vorteilhaft bei der Befestigung der Verbundplatte an einem Untergrund oder einer Unterkonstruktion aus, da die Befestigung in der Regel im Randbereich der Verbundplatte erfolgt.

Des Weiteren wird vorgeschlagen, dass 50 bis 80%, vorzugsweise 60 bis 75%, weiterhin vorzugsweise 70%, der Gesamtfläche der strömungsdichten Lage unmittelbar mit der schallabsorbierenden Leichtbauplatte verbunden werden. Das heißt, dass der mindestens eine Bereich B 20 bis 50%, vorzugsweise 25 bis 40% weiterhin vorzugsweise 30% der Gesamtfläche der strömungsdichten Lage einnimmt. Die lediglich bereichsweise Ausbildung der Zwischenlage hilft Material und Kosten einzusparen, insbesondere, wenn die Gesamtfläche der Zwischenlage weniger als die Hälfte der Gesamtfläche der strömungsdichten Lage beträgt. Zugleich werden die akustischen Eigenschaften der akustisch wirksamen Verbundplatte maximal verbessert. Denn - wie sich überraschenderweise herausgestellt hat - können keine weiteren Verbesserungen dadurch erzielt werden, dass der mindestens eine Bereich B größer als der mindestens eine Bereich A ausgelegt wird. Optimale Ergebnisse werden erzielt, wenn etwa 70% der Gesamtfläche der strömungsdichten Lage direkt mit der schallabsorbierenden Leichtbauplatte verbunden werden. Das heißt, dass die Gesamtfläche des mindestens einen Bereichs B bei etwa 30% der Gesamtfläche der strömungsdichten Lage liegen kann.

Bevorzugt wird die Zwischenlage aus einem faserhaltigen Vlies, Gewebe, Gewirke oder Gelege ausgebildet, das
a) eine Dicke nach DIN EN ISO 9073-2 von mindestens 0,2 mm, vorzugsweise mindestens 0,5 mm, weiterhin vorzugsweise mindestens 1,0 mm, und/oder
b) ein Flächengewicht nach DIN EN 12127 von 20 bis 200 g/m², vorzugsweise von 30 bis 160 g/m², weiterhin vorzugsweise von 40 bis 140 g/m², und/oder
c) einen spezifischen Strömungswiderstand nach DIN EN ISO 9053-1 kleiner 200 Pa*s/m, vorzugsweise kleiner 100 Pa*s/m, weiterhin vorzugsweise kleiner 50 Pa*s/m
aufweist.

Bei der Zwischenlage handelt es sich demnach bevorzugt um ein textiles Flächengebilde. Je dicker und weicher das textile Flächengebilde ist, desto beweglicher ist die darüber gespannte strömungsdichte Lage. Zugleich steigen mit der Dicke und Weichheit des textilen Flächengebildes seine eigenen dämpfenden bzw. schallabsorbierenden Eigenschaften, so dass nicht nur der Schalltransmissionsgrad τ, sondern auch der Schalldissipationsgrad δ verbessert wird. Wie bereits aufgezeigt, wirkt sich beides positiv auf den Schallabsorptionsgrad α aus. Als Anhaltspunkt für die Dicke und Dichte eines textilen Flächengebildes kann das Flächengewicht nach DIN EN 12127 herangezogen werden. Dabei gilt, je dicker oder dichter das Flächengebilde ist, desto höher ist das Flächengewicht.

Das Flächengewicht der Zwischenlage ist vergleichsweise niedrig gewählt. Dies lässt darauf schließen, dass zur Ausbildung der Zwischenlage ein nicht sehr dickes und/oder nicht sehr dichtes textiles Flächengebilde verwendet wird. Der ferner angegebene spezifische Strömungswiderstand bestätigt, dass die Dichte nicht sehr hoch ist. Die geringe Dichte wiederum erlaubt bei gleichem Flächengewicht eine größere Dicke der Zwischenlage. Da mit der Dicke der Zwischenlage auch ihre Dämpfungswirkung steigt, ist eine größere Dicke wünschenswert. Die angegebenen Dicken stellen Mindestdicken dar. Aus verarbeitungstechnischen Gründen sollte jedoch eine maximale Dicke nach DIN EN ISO 9073-2 von 4,0 mm, vorzugsweise von 3,0 mm, weiterhin vorzugsweise von 2,5 mm, nicht überschritten werden.

Faserhaltige Vliese, Gewebe, Gewirke oder Gelege weisen in der Regel eine hohe Strömungsoffenheit und damit eine geringe Dichte auf. Denn zwischen den Fasern verbleiben mehr oder weniger große Hohlräume. Die Fasern können dabei rein mechanisch und/oder durch Zugabe eines Bindemittels miteinander verbunden sein.

Bei den Fasern kann es sich um Glas-, Kunst- und/oder Naturfasern handeln. Bei dem vorgeschlagenen Verfahren wird vorzugsweise ein Vlies, Gewebe, Gewirke oder Gelege verwendet, das nicht brennbare Fasern, wie beispielsweise Glasfasern, enthält, um den einschlägigen Brandschutzanforderungen zu genügen, die üblicherweise an akustisch wirksame Verbundplatten gestellt werden.

Des Weiteren bevorzugt wird die strömungsdichte Lage aus einem faserhaltigen Vlies, Gewebe, Gewirke oder Gelege ausgebildet, das
a) eine Dicke nach DIN EN ISO 9073-2 von 0,2 bis 1,2 mm, vorzugsweise von 0,3 bis 0,8 mm, weiterhin vorzugsweise von 0,4 bis 0,6 mm,
b) ein Flächengewicht nach DIN EN 12127 von 200 bis 600 g/m², vorzugsweise von 220 bis 500 g/m², weiterhin vorzugsweise von 240 bis 450 g/m², und/oder
c) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

Die strömungsdichte Lage ist demnach bevorzugt ebenfalls ein textiles Flächengebilde. Dieses unterscheidet sich jedoch von dem zur Ausbildung der Zwischenlage deutlich. Denn sowohl das Flächengewicht als auch der spezifische Strömungswiderstand liegen deutlich über den entsprechenden Werten des textilen Flächengebildes zur Ausbildung der Zwischenlage. Der hohe spezifische Strömungswiderstand der strömungsdichten Lage verwundert nicht, da dieser funktionsbedingt ist. Das heißt, dass das textile Flächengebilde zur Ausbildung der strömungsdichten Lage eine sehr hohe Dichte aufweist. Diese wiederum führt zu einem hohen Flächengewicht bei vergleichsweise geringer Dicke. Da die strömungsdichte Lage vorrangig die Funktion einer Versiegelung aufweist, kann sie entsprechend dünn ausgebildet werden. Je dünner die strömungsdichte Lage ist, desto besser kann sie in Schwingung versetzt werden, so dass zugleich der Transmissionsgrad τ gesteigert wird.

Gemäß einer bevorzugten Ausführungsform der Erfindung werden die Zwischenlage und die strömungsdichte Lage im Verbund oder nacheinander auf die schallabsorbierende Leichtbauplatte aufgebracht, vorzugsweise aufgeklebt oder auflaminiert. Erfolgt die Aufbringung im Verbund, werden zunächst die Zwischenlage und die strömungsdichte Lage verbunden und dann gemeinsam, das heißt im Verbund, auf die schallabsorbierende Leichtbauplatte aufgebracht. Das Aufbringen der Zwischenlage und der strömungsdichten Lage erfolgt dann in einem Arbeitsschritt nach der Herstellung der schallabsorbierenden Leichtbauplatte. Alternativ können die Zwischenlage und die strömungsdichte Lage nacheinander auf die schallabsorbierende Leichtbauplatte aufgebracht werden, so dass nach der Herstellung der Leichtbauplatte mindestens zwei weitere Arbeitsschritte erforderlich sind. Das Aufbringen erfolgt vorzugsweise durch Aufkleben oder Auflaminieren, um in dem mindestens einen Bereich A der strömungsdichten Lage einen festen Verbund mit der schallabsorbierenden Leichtbauplatte zu erzielen.

Gemäß einer weiteren bevorzugten Ausführungsform der Erfindung werden die Zwischenlage und die strömungsdichte Lage bereits bei der Herstellung der schallabsorbierenden Leichtbauplatte mit dieser verbunden, vorzugsweise verpresst. Auf diese Weise kann mindestens ein Arbeitsschritt eingespart werden. Beispielsweise kann die schallabsorbierende Leichtbauplatte aus einer Zusammensetzung hergestellt werden, die in eine Form eingebracht und in der Form verpresst wird. Das Vlies, Gewebe, Gewirke und/oder Gelege zur Ausbildung der Zwischenlage und/oder der strömungsdichten Lage kann bzw. können dann mit in die Form eingegeben und zusammen mit der Zusammensetzung verpresst werden. Das Verpressen kann unter Zugabe von Wärme erfolgen, um den Verbund und damit die Haftung zwischen den Lagen der Verbundplatte zu verbessern.

Bevorzugt wird die schallabsorbierende Leichtbauplatte aus einer Zusammensetzung hergestellt, die mindestens einen Leichtfüllstoff und mindestens ein organisches Polymerbindemittel enthält. Ein Leichtfüllstoff bildet in der Regel offene Poren bzw. Zellen aus, in denen sich Schallwellen verfangen können, so dass ihre kinetische Energie in Wärme umgewandelt wird und eine Schallabsorption erzielt wird. Bei dem mindestens einen offenporigen bzw. offenzelligen Leichtfüllstoff kann es sich insbesondere um Blähglas, Blähton, Blähschiefer, geschäumtes Blähglas, Blähglasgranulat, Blähperlite, Blähglimmer, insbesondere geblähtes oder geschäumtes Vermiculit, Hohlglaskugeln, Hohlkeramikkugeln, Lavaschlacke, Tuff und/oder Bims handeln.

Das in der Zusammensetzung enthaltene organische Polymerbindemittel trägt dazu bei, dass eine aus der Zusammensetzung hergestellte Leichtbauplatte eine gewisse Elastizität aufweist. Diese fördert einen hohen Schallabsorptionsgrad und verbessert zudem das Bruchverhalten der Leichtbauplatte. Bei dem mindestens einen organischen Polymerbindemittel kann es sich insbesondere um ein organisches Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten handeln. Bevorzugt wird ein Copolymer aus Vinylacetat und Ethylen als organisches Polymerbindemittel eingesetzt. Besonders bevorzugt wird ein organisches Polymerbindemittel auf Epoxidharzbasis mit einem geeigneten Härter verwendet. Bei einem organischen Polymerbindemittel auf Epoxidharzbasis handelt es sich um ein reaktives Bindemittel, das heißt es trocknet nicht, sondern es härtet aus. Das Aushärten erfolgt schneller und kontrollierbarer, was u.a. zu kürzeren Taktzeiten führt. Zudem ergeben organische Polymerbindemittel auf Epoxidharzbasis mechanisch stabile Platten bei zugleich geringem Materialeinsatz, da sie eine hohe Bindekraft aufweisen.

In Weiterbildung der Erfindung wird vorgeschlagen, dass die schallabsorbierende Leichtbauplatte aus einer Zusammensetzung hergestellt wird, die eine Leichtfüllstoffkombination aus Leichtfüllstoffen unterschiedlicher Partikelgrößenfraktionen enthält. Die Verwendung von Leichtfüllstoffen unterschiedlicher Partikelgrößenfraktionen führt zu einer hohen Packungsdichte der Leichtfülle und damit zu kleinen Zwickelräumen bzw. Haufwerksporen, die zwischen den einzelnen Leichtfüllstoffpartikeln verbleiben. Es hat sich gezeigt, dass kleine Haufwerksporen zwischen den Leichtfüllstoffpartikeln einen positiven Einfluss auf das Schallabsorptionsverhalten der Leichtbauplatte haben, insbesondere kann die Schallabsorption bei besonders hohen sowie tiefen Frequenzen verbessert werden, so dass ein sehr breiter Frequenzbereich, beispielsweise ein Frequenzbereich von 125 bis 5000 Hz, abgedeckt wird. Darüber hinaus wird erreicht, dass die Absorption über den gesamten Frequenzbereich geleichmäßiger verläuft. Das heißt, dass eine Glättung der Absorptionskurve erzielt wird, so dass diese weniger steil verläuft.

Bevorzugt enthält die Leichtfüllstoffkombination der Zusammensetzung mindestens drei Partikelgrößenfraktionen, umfassend
- eine erste Fraktion A mit einer Partikelgröße nach DIN EN 933-1 von 0,8-2,5 mm, vorzugsweise von 0,9-2,2 mm, weiterhin vorzugsweise von 1,0-2,0 mm,
- eine zweite Fraktion B mit einer Partikelgröße nach DIN EN 933-1 von 0,28-1,6 mm, vorzugsweise von 0,4-1,25 mm, weiterhin vorzugsweise von 0,5-1,0 mm, und
- eine dritte Fraktion C mit einer Partikelgröße nach DIN EN 933-1 von 0,1-0,8 mm, vorzugsweise von 0,2-0,63 mm, weiterhin vorzugsweise von 0,25-0,5 mm.

Das heißt, dass die Leichtfüllstoffe in der Zusammensetzung in zumindest trimodaler Partikelgrößenverteilung vorliegen. Dabei bildet mindestens eine Fraktion, vorliegend die Fraktion C, eine Feinfraktion aus. Die Leichtfüllstoffpartikel der Feinfraktion sind in der Lage, die Zwickelräume zu besetzen, die zwischen den Leichtfüllstoffpartikeln der beiden anderen Fraktionen verbleiben. Dadurch verringert sich die Größe der verbleibenden Haufwerksporen, zugleich steigt die Anzahl der Haufwerksporen. Beides hat positive Auswirkungen auf das Schallabsorptionsverhalten der Leichtbauplatte. Die in der Zusammensetzung enthaltene Feinfraktion bzw. Fraktion C erhöht zudem die Masse der Leichtbauplatte, was sich insbesondere positiv auf die Schallabsorption tiefer Frequenzen auswirkt.

Die Partikelgrößenfraktionen der in der Zusammensetzung enthaltenen Leichtfüllstoffkombination können einen sich überschneidenden Bereich aufweisen. Ist dies der Fall, ist vorzugsweise der Überschneidungsbereich kleiner als der Bereich, der jeweils außerhalb des Überschneidungsbereichs liegt.

Ferner wird vorgeschlagen, dass die Partikelgröße nach DIN EN 933-1 einer Fraktion um mindestens den Faktor 0,5 kleiner als die der nächstgröberen Fraktion ist. Das heißt, dass die Partikelgröße der Fraktion C um mindestens den Faktor 0,5 kleiner als die Partikelgröße der Fraktion B ist und die Partikelgröße der Fraktion B mindestens um den Faktor 0,5 kleiner als die Partikelgröße der Fraktion A ist. Durch diese Maßnahme wird ein deutlicher Partikelgrößenunterschied zwischen den Fraktionen erzielt, der sicherstellt, dass die jeweils feineren Leichtfüllstoffpartikel die Zwickelräume zwischen den jeweils gröberen Leichtfüllstoffpartikeln besetzen können.

Bevorzugt wird die schallabsorbierende Leichtbauplatte aus einer Zusammensetzung hergestellt, die
- 30-60 Gew.-%, vorzugsweise 32-56 Gew.-%, weiterhin vorzugsweise 34-50 Gew.-% Leichtfüllstoffe der ersten Fraktion A,
- 20-50 Gew.-%, vorzugsweise 24-45 Gew.-%, weiterhin vorzugsweise 26-40 Gew.-% der zweiten Fraktion B und
- 4-16 Gew.-%, vorzugsweise 6-14 Gew.-%, weiterhin vorzugsweise 8-12 Gew.-% der dritten Fraktion C jeweils bezogen auf das Gesamtgewicht der Ausgangsstoffe der Zusammensetzung enthält.

Der Anteil des enthaltenen organischen Bindemittels beträgt vorzugsweise 4,0-12,0 Gew.-%, weiterhin vorzugsweise 6,0-11,0 Gew.-%, besonders bevorzugt 8,0-10,0 Gew.-% bezogen auf das Gesamtgewicht der Ausgangsstoffe der Zusammensetzung.

Ferner bevorzugt wird die schallabsorbierende Leichtbauplatte aus einer Zusammensetzung hergestellt, die ein Hydrophobierungsmittel, beispielsweise aus der Gruppe der Silikonharze, Polysiloxane, Fettsäuren, Fettsäurederivate, Wachse und/oder Paraffine, enthält. Das Hydrophobierungsmittel verringert die Neigung der Leichtfüllstoffpartikel, Wasser aufzunehmen und in den Poren einzulagern. Dadurch kann die Feuchtigkeit der Leichtfüllstoffpartikel reduziert werden, wodurch gleichzeitig das Rücktrocknen gefördert wird. Der Anteil des enthaltenen Hydrophobierungsmittels beträgt vorzugsweise 0,01-4,0 Gew.-% bezogen auf das Gesamtgewicht der Ausgangsstoffe der Zusammensetzung. Bevorzugt sind 0,05-3,0 Gew.-%, besonders bevorzugt 0,1-2,0 Gew.-% eines Hydrophobierungsmittels, insbesondere eines Hydrophobierungsmittels auf Siloxan-Basis, bezogen auf das Gesamtgewicht der Ausgangsstoffe in der Zusammensetzung enthalten.

Vorteilhafterweise wird die schallabsorbierende Leichtbauplatte bei ihrer Herstellung ein- oder beidseitig kaschiert. Die Kaschierung verbessert die Haptik und damit die Verarbeitungsfreundlichkeit der Leichtbauplatte. Ferner kann die Kaschierung als Haftgrund für weitere aufzubringende Lagen und/oder Schichten dienen. Des Weiteren führt die Kaschierung zu einer gewissen Armierung der Leichtbauplatte, so dass die Gesamtstabilität der Leichtbauplatte verbessert wird.

Darüber hinaus wird eine akustisch wirksame Verbundplatte für den Innenausbau vorgeschlagen. Die Verbundplatte umfasst eine schallabsorbierende Leichtbauplatte und eine strömungsdichte Lage. Erfindungsgemäß ist die strömungsdichte Lage in mindestens einem Bereich A unmittelbar und in mindestens einem Bereich B mittelbar über eine Zwischenlage mit der schallabsorbierenden Leichtbauplatte verbunden.

Die vorgeschlagene akustisch wirksame Verbundplatte weist den Vorteil auf, dass sie aufgrund der strömungsdichten Lage weniger zu Verschmutzungen neigt. Zugleich wird durch die lediglich bereichsweise zwischen der strömungsdichten Lage und der schallabsorbierenden Leichtbauplatte angeordnete Zwischenlage in zumindest einem Bereich (Bereich B) eine gewisse Beweglichkeit der strömungsdichten Lage gegenüber der schallabsorbierenden Leichtbauplatte erreicht. Dies ermöglicht ein Schwingen der strömungsdichten Lage, so dass Schallwellen nicht reflektiert, sondern durchgelassen bzw. transmittiert werden. Zugleich leistet die in dem mindestens einen Bereich B angeordnete Zwischenlage einen Beitrag zur Schalldissipation, so dass zusätzlich die schallabsorbierenden Eigenschaften der Leichtbauplatte gesteigert werden. Die vorgeschlagene Verbundplatte weist demnach eine hohe akustische Wirksamkeit auf.

Auch für die vorgeschlagene akustisch wirksame Verbundplatte gilt, dass die Zwischenlage lediglich bereichsweise, das heißt in einem oder mehreren, zueinander beabstandeten Bereichen angeordnet ist, so dass sie sich aus einem oder mehreren Teilen, insbesondere Flächengebilden, zusammensetzen kann.

Die vorgeschlagene akustisch wirksame Verbundplatte kann insbesondere nach dem zuvor beschriebenen erfindungsgemäßen Verfahren hergestellt werden, so dass die gleichen zuvor beschriebenen Vorteile erzielt werden. Insoweit wird daher auf die in Zusammenhang mit dem Verfahren genannten Vorteile verwiesen.

Bevorzugt ist die Zwischenlage beabstandet zu mindestens einem Randbereich der strömungsdichten Lage angeordnet. Das heißt, dass in diesem mindestens einen Randbereich die strömungsdichte Lage unmittelbar bzw. direkt mit der schallabsorbierenden Leichtbauplatte verbunden ist. Der mindestens eine Bereich A ist demnach ein Randbereich. Der mindestens eine Bereich B ist in diesem Fall in einem Abstand zu dem mindestens einen Randbereich angeordnet. Besonders bevorzugt wird der mindestens eine Bereich B von dem mindestens einen Bereich A umlaufend eingefasst. Das heißt, dass die strömungsdichte Lage in ihren Randbereichen umlaufend unmittelbar bzw. direkt mit der schallabsorbierenden Leichtbauplatte verbunden ist. Dadurch steigt zum einen die Robustheit der Verbundplatte in den Randbereichen. Zum anderen wird eine umlaufend gleichmäßige Spannung der strömungsdichten Lage über die Zwischenlage erreicht. Bei mehreren Bereichen B sind diese bevorzugt zueinander sowie zu den Randbereichen beabstandet angeordnet. Das heißt, dass jeder Bereich B von einem Bereich A bzw. dem mindestsens einen Bereich A eingefasst wird.

Gemäß einer bevorzugten Ausführungsform der Erfindung ist die Zwischenlage aus einem faserhaltigen Vlies, Gewebe, Gewirke oder Gelege, ausgebildet, das
a) eine Dicke nach DIN EN ISO 9073-2 von mindestens 0,2 mm, vorzugsweise mindestens 0,5 mm, weiterhin vorzugsweise mindestens 1,0 mm, und/oder
b) ein Flächengewicht nach DIN EN 12127 von 20 bis 200 g/m², vorzugsweise von 30 bis 160 g/m², weiterhin vorzugsweise von 40 bis 140 g/m², und/oder
c) einen spezifischen Strömungswiderstand nach DIN EN ISO 9053-1 kleiner 200 Pa*s/m, vorzugsweise kleiner 100 Pa*s/m, weiterhin vorzugsweise kleiner 50 Pa*s/m
aufweist.

Die Zwischenlage ist demnach ein textiles Flächengebilde. Der angegebene spezifische Strömungswiderstand weist auf ein textiles Flächengebilde, das nicht sehr dicht ist. Die geringe Dichte erlaubt bei gleichem Flächengewicht eine größere Dicke der Zwischenlage. Eine größere Dicke der Zwischenlage ist wünschenswert, da mit der Dicke die Dämpfungswirkung der Zwischenlage steigt. Die angegebenen Dicken sind daher Mindestdicken. Aus verarbeitungstechnischen Gründen sollte die maximale Dicke nach DIN EN ISO 9073-2 jedoch nicht mehr als 4,0 mm, vorzugsweise 3,0 mm, weiterhin vorzugsweise 2,5 mm, betragen.

Des Weiteren wird vorgeschlagen, dass die strömungsdichte Lage aus einem faserhaltigen Vlies, Gewebe, Gewirke oder Gelege ausgebildet ist, das
a) eine Dicke nach DIN EN ISO 9073-2 von 0,2 bis 1,2 mm, vorzugsweise von 0,3 bis 0,8 mm, weiterhin vorzugsweise von 0,4 bis 0,6 mm,
b) ein Flächengewicht nach DIN EN 12127 von 200 bis 600 g/m², vorzugsweise von 220 bis 500 g/m², weiterhin vorzugsweise von 240 bis 450 g/m², und/oder
c) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

Bei der strömungsdichten Lage handelt es sich demnach bevorzugt ebenfalls um ein textiles Flächengebilde, dieses unterscheidet sich jedoch deutlich von dem textilen Flächengebilde, aus dem die Zwischenlage ausgebildet ist. Denn die strömungsdichte Lage weist ein deutlich höheres Flächengewicht und einen deutlich höheren spezifischen Strömungswiderstand auf, wobei letzteres aufgrund der Funktion der strömungsdichten Lage nicht verwunderlich ist. Das heißt, dass das textile Flächengebilde zur Ausbildung der strömungsdichten Lage eine sehr hohe Dichte aufweist, so dass sie als luft- oder winddicht bezeichnet werden kann. Das heißt, dass keine staubhaltige Luft die Verbundplatte durchdringen kann, so dass die Verbundplatte deutlich weniger zu Verschmutzungen neigt. Die hohe Dichte der strömungsdichten Lage ermöglicht wiederum eine geringere Dicke, um auf das angegebene Flächengewicht zu kommen. Da die strömungsdichte Lage vorrangig die Funktion einer Versiegelung aufweist, kann diese entsprechend dünn ausgebildet werden. In der Ausführung als dünnes textiles Flächengebilde kann zudem die Beweglichkeit der strömungsdichten Lage und damit der Schalltransmissionsgrad τ gesteigert werden.

Ferner wird vorgeschlagen, dass die schallabsorbierende Leichtbauplatte eine Dicke von 12 bis 35 mm, vorzugsweise von 16 bis 30 mm, weiterhin vorzugsweise von 18 bis 26 mm aufweist. Hierbei handelt es sich um gängige Dicken von Leichtbauplatten, so dass es sich bei der schallabsorbierenden Leichtbauplatte der vorgeschlagenen Verbundplatte um eine herkömmliche schallabsorbierende Leichtbauplatte handeln kann.

Gemäß einer bevorzugten Ausführungsform der Erfindung enthält die schallabsorbierende Leichtbauplatte der vorgeschlagenen Verbundplatte mindestens einen Leichtfüllstoff sowie mindestens ein organisches Polymerbindemittel. Der Leichtfüllstoff trägt zur Schallabsorption bei, da Leichtfüllstoffe Poren aufweisen, in denen Schallwellen in Wärme gewandelt, das heißt absorbiert werden. Das ferner enthaltene organische Polymerbindemittel verleiht der Leichtbauplatte eine gewisse Elastizität. Diese fördert einen hohen Schallabsorptionsgrad und verbessert zugleich das Bruchverhalten der Leichtbauplatte. Hinsichtlich geeigneter organischer Polymerbindemittel sowie geeigneter Leichtfüllstoffe wird auf die Beschreibung des erfindungsgemäßen Verfahrens verwiesen.

Besonders bevorzugt enthält die schallabsorbierende Leichtbauplatte eine Leichtfüllstoffkombination aus Leichtfüllstoffen unterschiedlicher Partikelgrößenfraktionen, da dies zu einer hohen Packungsdichte der Leichtfüllstoffe führt, so dass kleine Zwickelräume bzw. Haufwerksporen zwischen den einzelnen Leichtfüllstoffpartikeln verbleiben. Es hat sich gezeigt, dass kleine Zwickelräume bzw. Haufwerksporen den Frequenzbereich der Schallabsorption erweitern, so dass die Schallabsorption verbessert wird. Hinsichtlich der Partikelgrößenverteilung wird wiederum auf die Beschreibung des erfindungsgemäßen Verfahrens verwiesen.

Eine bevorzugte Ausführungsform einer erfindungsgemäßen akustisch wirksamen Verbundplatte, deren Herstellung und deren Vorteile werden nachfolgend anhand eines konkreten Ausführungsbeispiels sowie eines Referenzbeispiels näher beschrieben.

### Ausführungsbeispiel:

### Zur Herstellung einer schallabsorbierenden Leichtbauplatte wurden

| | | |
|---|---|---|
| 40,0 | Gew.-% | Blähglas in einer Partikelgrößenfraktion (A) 1,0-2,0 mm |
| 33,0 | Gew.-% | Blähglas in einer Partikelgrößenfraktion (B) 0,5-1,0 mm |
| 10,0 | Gew.-& | Blähglas in einer Partikelgrößenfraktion (C) 0,25-0,5 mm |
| 8,0 | Gew.-% | Epoxidharz-Bindemittel und Amin-Härter |
| 8,5 | Gew.-% | Aluminiumhydroxid als Feinstfüllstoff |
| 0,5 | Gew.-% | Additive, enthaltend ein Hydrophobierungsmittel |
| 100 | Gew.-% | |

homogen gemischt, in eine Form mit den Abmessungen 1200 mm x 800 mm eingefüllt und in der Form unter Einwirkung von Druck und Wärme (150°C) zu einer Platte mit einer Plattenstärke von 25 mm verpresst.

Auf die schallabsorbierende Leichtbauplatte wurde einseitig ein 0,5 mm dickes Vlies mit einem spezifischen Strömungswiderstand > 20000 Pa*s/m und einem Flächengewicht von 300 g/m² aufgebracht, wobei das Vlies in einem Bereich A unmittelbar mit der schallabsorbierenden Leichtbauplatte verklebt wurde. In drei zueinander sowie zu den Rändern beabstandeten Bereichen B wurde zwischen dem Vlies und der schallabsorbierenden Leichtbauplatte jeweils ein 0,5 mm dickes Vlies mit einem spezifischen Strömungswiderstand < 40 Pa*s/m und einem Flächengewicht von 60 g/m² als Zwischenlage angeordnet. Die Vliese hatten jeweils die Abmessungen 260 mm x 380 mm. Die Abstände der als Zwischenlage dienenden Vliese untereinander sowie zu den Rändern an den Querseiten betrug jeweils 105 mm. Die Abstände der als Zwischenlage dienenden Vliese zu den Rändern an den Längsseiten betrug jeweils 210 mm.

Die derart hergestellte akustisch wirksame Verbundplatte wies einen Schallabsorptionsgrad α bei 500 Hz von 0,64 auf. Dieser Wert wurde nach ISO 10534-2 im Impedanzrohr gemessen.

Bereits vor dem Aufbringen der Zwischenlage und der strömungsdichten Lage wurde der Schallabsorptionsgrad α bei 500 Hz der schallabsorbierenden Leichtbauplatte nach ISO 10534-2 im Impedanzrohr gemessen, wobei diese Messung einen Wert von 0,84 ergab. Das heißt, dass sich der Schallabsorptionsgrad α der schallabsorbierenden Leichtbauplatte durch das Aufbringen der weiteren Lagen verschlechtert hat.

Als Referenz wurde eine weitere Verbundplatte nach dem zuvor beschriebenen Verfahren hergestellt, wobei jedoch auf die bereichsweise Anordnung einer Zwischenlage zwischen der strömungsdichten Lage und der schallabsorbierenden Leichtbauplatte verzichtet wurde. Stattdessen wurde die strömungsdichte Lage direkt vollflächig mit der schallabsorbierenden Leichtbauplatte verklebt. Anschließend wurde auch hier der Schallabsorptionsgrad α bei 500 Hz nach ISO 12534-2 im Impedanzrohr gemessen. Die Messung ergab einen Wert von 0,40.

Die Messungen zeigen, dass
- das direkte Verkleben der strömungsdichten Lage auf der schallabsorbierenden Leichtbauplatte erhebliche negative Auswirkungen auf die akustische Wirksamkeit der Verbundplatte hat, und
- die negativen Auswirkungen zumindest in Teilen aufgehoben werden können, wenn zwischen der strömungsdichten Lage und der schallabsorbierenden Leichtbauplatte in zumindest einem Bereich (Bereich B) eine Zwischenlage angeordnet wird, so dass die strömungsdichte Lage lediglich bereichsweise direkt mit der schallabsorbierenden Leichtbauplatte verklebt ist.

Anhand der beigefügten Figuren werden weitere bevorzugte Ausführungsformen einer erfindungsgemäßen akustisch wirksamen Verbundplatte erläutert. Diese zeigen:
Fig. 1 einen Querschnitt durch eine erste erfindungsgemäße akustisch wirksame Verbundplatte,
Fig. 2 einen Querschnitt durch eine zweite erfindungsgemäße akustisch wirksame Verbundplatte und
Fig. 3 eine Draufsicht auf eine erfindungsgemäße akustisch wirksame Verbundplatte.

### Ausführliche Beschreibung der Figuren

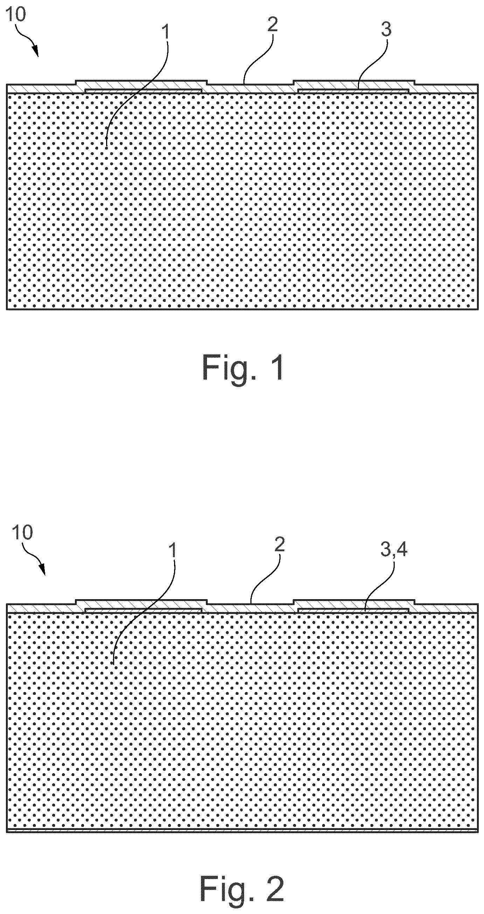

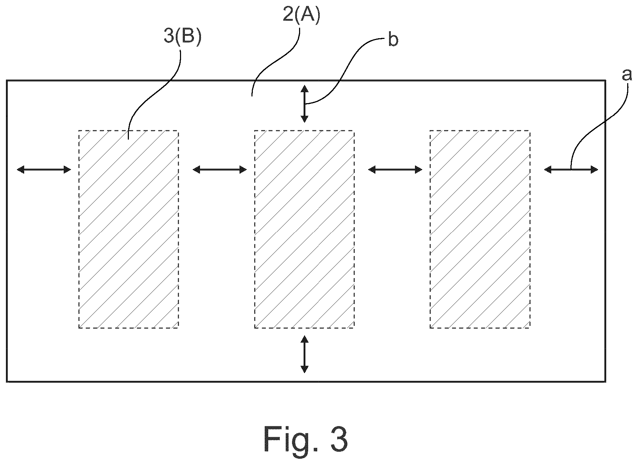

Der Figur 1 ist eine erfindungsgemäße akustisch wirksame Verbundplatte 10 gemäß einer ersten bevorzugten Ausführungsform zu entnehmen. Die Verbundplatte 10 weist eine schallabsorbierende Leichtbauplatte 1 und eine strömungsdichte Lage 2 auf, wobei zwischen der schallabsorbierenden Leichtbauplatte 1 und der strömungsdichten Lage 2 bereichsweise eine Zwischenlage 3 angeordnet ist. Durch die bereichsweise Anordnung der Zwischenlage 3 wird ein Bereich A ausgebildet (siehe auch Figur 3), in dem die strömungsdichte Lage 2 unmittelbar bzw. direkt mit der schallabsorbierenden Leichtbauplatte 1 verbunden, vorzugsweise verklebt, ist. Ferner werden Bereiche B ausgebildet (siehe auch Figur 3), in denen die Zwischenlage 3 die strömungsdichte Lage 2 von der schallabsorbierenden Leichtbauplatte 1 trennt. In den Bereichen B weist die strömungsdichte Lage 2 eine gewisse Beweglichkeit gegenüber der schallabsorbierenden Leichtbauplatte 1 auf. Das heißt, dass die strömungsdichte Lage 2 in den Bereichen B schwingen kann, so dass in den Bereichen B auftreffende Schallwellen vorrangig nicht reflektiert, sondern durchgelassen bzw. transmittiert werden. Die strömungsdichte Lage 2 leistet somit einen Beitrag zur Schalltransmission und damit zur akustischen Wirksamkeit der Verbundplatte 10. Zugleich hat die strömungsdichte Lage 2 die Funktion, die Verbundplatte 10 rückseitig luftdicht zu schließen bzw. zu versiegeln. Die Verbundplatte 10 neigt dadurch weniger stark zu Verschmutzungen, da keine staubhaltige Luft die Verbundplatte 10 durchströmen kann.

Der Figur 2 ist eine erfindungsgemäße akustisch wirksame Verbundplatte 10 gemäß einer zweiten bevorzugten Ausführungsform zu entnehmen. Auch diese Verbundplatte 10 weist eine schallabsorbierende Leichtbauplatte 1, eine strömungsdichte Lage 2 sowie eine zwischen der schallabsorbierenden Leichtbauplatte 1 und der strömungsdichten Lage 2 bereichsweise angeordnete Zwischenlage 3 auf. Im Unterschied zur Ausführungsform der Figur 1 ist hier die schallabsorbierende Leichtbauplatte 1 zumindest einseitig mit einer Kaschierung 4 versehen. Die Kaschierung 4 verbessert die Haptik und die Verarbeitungsfreundlichkeit der schallabsorbierenden Leichtbauplatte 1. Zudem bewirkt sie eine gewisse Armierung. Bei einer beidseitig angeordneten Kaschierung 4 kann diese als Haftgrund für die strömungsdichte Lage 2 und die Zwischenlage 3 dienen. Alternativ kann - wie beispielhaft in der Figur 2 dargestellt - die der strömungsdichten Lage 2 zugewandte Kaschierung 4 lediglich bereichsweise angeordnet werden, so dass sie zugleich die Zwischenlage 3 ausbildet. Im Übrigen gleicht die Verbundplatte 10 der Verbundplatte 10 der Figur 1.

In der Figur 3 ist beispielhaft eine erfindungsgemäße akustisch wirksame Verbundplatte 10 in einer Draufsicht dargestellt. Die Verbundplatte 10 kann - analog dem angegebenen Ausführungsbeispiel - eine Länge von 1200 mm und eine Breite von 800 mm aufweisen. In der Draufsicht sind ein Bereich A sowie Bereiche B der strömungsdichten Lage 2 angedeutet (siehe gestrichelte Linien). Im Bereich A ist die strömungsdichte Lage 2 unmittelbar bzw. direkt mit der schallabsorbierenden Leichtbauplatte 1 verbunden, vorzugsweise verklebt. In den Bereichen B ist zwischen der strömungsdichten Lage 2 und der schallabsorbierenden Leichtbauplatte 1 die Zwischenlage 3 ausgebildet. Die Zwischenlage 3 wird vorliegende durch drei Vliesstücke mit den Abmessungen 260 mm x 380 mm ausgebildet. Analog dem Ausführungsbeispiel weisen die drei Vliesstücke untereinander sowie zu den Querseiten jeweils einen Abstand a von 105 mm auf. Zu den Längsseiten weisen die Vliesstücke jeweils einen Abstand b von 210 mm auf.

Da die strömungsdichte Lage 2 in den Bereichen B nicht unmittelbar bzw. direkt mit der schallabsorbierenden Leichtbauplatte 1 verbunden, insbesondere verklebt, ist, weist die strömungsdichte Lage 2 in den Bereichen B eine gewisse Beweglichkeit gegenüber der schallabsorbierenden Leichtbauplatte 1 auf. In den Bereichen B auf die strömungsdichte Lage 2 auftreffende Schallwellen werden daher vorrangig durchgelassen bzw. transmittiert, so dass der Schalltransmissionsgrad steigt. Zugleich leisten auch die Vliesstücke der Zwischenlage 3 einen Beitrag zur Schallabsorption der akustisch wirksamen Verbundplatte 10.

## Patentansprüche

1. Verfahren zur Herstellung einer akustisch wirksamen Verbundplatte (10) für den Innenausbau, umfassend eine schallabsorbierende Leichtbauplatte (1) und eine strömungsdichte Lage (2),
**dadurch gekennzeichnet, dass** die strömungsdichte Lage (2) in mindestens einem Bereich (A) unmittelbar und in mindestens einem Bereich (B) mittelbar über eine Zwischenlage (3) mit der schallabsorbierenden Leichtbauplatte (1) verbunden wird.

2. Verfahren nach Anspruch 1,
**dadurch gekennzeichnet, dass** die Zwischenlage (3) beabstandet zu mindestens einem Randbereich der strömungsdichten Lage (2) angeordnet wird.

3. Verfahren nach Anspruch 1 oder 2,
**dadurch gekennzeichnet, dass** 50 bis 80%, vorzugsweise 60 bis 75%, weiterhin vorzugsweise 70%, der Gesamtfläche der strömungsdichten Lage (2) unmittelbar mit der schallabsorbierenden Leichtbauplatte (1) verbunden werden.

4. Verfahren nach einem der vorhergehenden Ansprüche,
**dadurch gekennzeichnet, dass** die Zwischenlage (3) aus einem faserhaltigen Vlies, Gewebe, Gewirke oder Gelege ausgebildet wird, das
a) eine Dicke nach DIN EN ISO 9073-2 von mindestens 0,2 mm, vorzugsweise mindestens 0,5 mm, weiterhin vorzugsweise mindestens 1,0 mm, und/oder
b) ein Flächengewicht nach DIN EN 12127 von 20 bis 200 g/m², vorzugsweise von 30 bis 160 g/m², weiterhin vorzugsweise von 40 bis 140 g/m², und/oder
c) einen spezifischen Strömungswiderstand nach DIN EN ISO 9053-1 kleiner 200 Pa*s/m, vorzugsweise kleiner 100 Pa*s/m, weiterhin vorzugsweise kleiner 50 Pa*s/m
aufweist.

5. Verfahren nach einem der vorhergehenden Ansprüche,
**dadurch gekennzeichnet, dass** die strömungsdichte Lage (2) aus einem faserhaltigen Vlies, Gewebe, Gewirke oder Gelege ausgebildet wird, das
a) eine Dicke nach DIN EN ISO 9073-2 von 0,2 bis 1,2 mm, vorzugsweise von 0,3 bis 0,8 mm, weiterhin vorzugsweise von 0,4 bis 0,6 mm,
b) ein Flächengewicht nach DIN EN 12127 von 200 bis 600 g/m², vorzugsweise von 220 bis 500 g/m², weiterhin vorzugsweise von 240 bis 450 g/m², und/oder
c) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

6. Verfahren nach einem der vorhergehenden Ansprüche,
**dadurch gekennzeichnet, dass** die Zwischenlage (3) und die strömungsdichte Lage (2) im Verbund oder nacheinander auf die schallabsorbierende Leichtbauplatte (1) aufgebracht, vorzugsweise aufgeklebt oder auflaminiert, werden.

7. Verfahren nach einem der Ansprüche 1 bis 5,
**dadurch gekennzeichnet, dass** die Zwischenlage (3) und die strömungsdichte Lage (2) bereits bei der Herstellung der schallabsorbierenden Leichtbauplatte (1) mit dieser verbunden, vorzugsweise verpresst, werden.

8. Verfahren nach einem der vorhergehenden Ansprüche,
**dadurch gekennzeichnet, dass** die schallabsorbierende Leichtbauplatte (1) aus einer Zusammensetzung hergestellt wird, die mindestens einen Leichtfüllstoff und mindestens ein organisches Polymerbindemittel enthält.

9. Verfahren nach Anspruch 8,
**dadurch gekennzeichnet, dass** die schallabsorbierende Leichtbauplatte (1) aus einer Zusammensetzung hergestellt wird, die eine Leichtfüllstoffkombination aus Leichtfüllstoffen unterschiedlicher Partikelgrößenfraktionen enthält, wobei vorzugsweise die Leichtfüllstoffkombination mindestens drei Partikelgrößenfraktionen enthält, umfassend
- eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
- eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
- eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm.

10. Verfahren nach Anspruch 9,
**dadurch gekennzeichnet, dass** die Partikelgröße nach DIN EN 933-1 einer Fraktion (B, C) um mindestens den Faktor 0,5 kleiner als die der nächstgröberen Fraktion (A, B) ist.

11. Verfahren nach Anspruch 9 oder 10,
**dadurch gekennzeichnet, dass** die schallabsorbierende Leichtbauplatte (1) aus einer Zusammensetzung hergestellt wird, die
- 30-60 Gew.-%, vorzugsweise 32-56 Gew.-%, weiterhin vorzugsweise 34-50 Gew.-% Leichtfüllstoffe der ersten Fraktion (A),
- 20-50 Gew.-%, vorzugsweise 24-45 Gew.-%, weiterhin vorzugsweise 26-40 Gew.-% der zweiten Fraktion (B) und
- 4-16 Gew.-%, vorzugsweise 6-14 Gew.-%, weiterhin vorzugsweise 8-12 Gew.-% der dritten Fraktion (C) jeweils bezogen auf das Gesamtgewicht der Ausgangsstoffe enthält.

12. Verfahren nach einem der Ansprüche 8 bis 11,
**dadurch gekennzeichnet, dass** die schallabsorbierende Leichtbauplatte (1) aus einer Zusammensetzung hergestellt wird, die ein Hydrophobierungsmittel, beispielsweise aus der Gruppe der Silikonharze, Polysiloxane, Fettsäuren, Fettsäurederivate, Wachse und/oder Paraffine, enthält.

13. Verfahren nach einem der Ansprüche 8 bis 12,
**dadurch gekennzeichnet, dass** die schallabsorbierende Leichtbauplatte (1) bei ihrer Herstellung ein- oder beidseitig kaschiert wird.

14. Akustisch wirksame Verbundplatte (10) für den Innenausbau, umfassend eine schallabsorbierende Leichtbauplatte (1) und eine strömungsdichte Lage (2), **dadurch gekennzeichnet, dass** die strömungsdichte Lage (2) in mindestens einem Bereich (A) unmittelbar und in mindestens einem Bereich (B) mittelbar über eine Zwischenlage (3) mit der schallabsorbierenden Leichtbauplatte (1) verbunden ist.

15. Verbundplatte (10) nach Anspruch 14,
**dadurch gekennzeichnet, dass** die Zwischenlage (3) beabstandet zu mindestens einem Randbereich der strömungsdichten Lage (2) angeordnet ist.

16. Verbundplatte (10) nach Anspruch 14 oder 15,
**dadurch gekennzeichnet, dass** die Zwischenlage (3) aus einem faserhaltigen Vlies, Gewebe, Gewirke oder Gelege, ausgebildet ist, das
a) eine Dicke nach DIN EN ISO 9073-2 von mindestens 0,2 mm, vorzugsweise mindestens 0,5 mm, weiterhin vorzugsweise mindestens 1,0 mm, und/oder
b) ein Flächengewicht nach DIN EN 12127 von 20 bis 200 g/m², vorzugsweise von 30 bis 160 g/m², weiterhin vorzugsweise von 40 bis 140 g/m², und/oder
c) einen spezifischen Strömungswiderstand nach DIN EN ISO 9053-1 kleiner 200 Pa*s/m, vorzugsweise kleiner 100 Pa*s/m, weiterhin vorzugsweise kleiner 50 Pa*s/m
aufweist.

17. Verbundplatte (10) nach einem der Ansprüche 14 bis 16,
**dadurch gekennzeichnet, dass** die strömungsdichte Lage (2) aus einem faserhaltigen Vlies, Gewebe, Gewirke oder Gelege ausgebildet ist, das
a) eine Dicke nach DIN EN ISO 9073-2 von 0,2 bis 1,2 mm, vorzugsweise von 0,3 bis 0,8 mm, weiterhin vorzugsweise von 0,4 bis 0,6 mm,
b) ein Flächengewicht nach DIN EN 12127 von 200 bis 600 g/m², vorzugsweise von 220 bis 500 g/m², weiterhin vorzugsweise von 240 bis 450 g/m², und/oder
c) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

18. Verbundplatte (10) nach einem der Ansprüche 14 bis 17,
**dadurch gekennzeichnet, dass** die schallabsorbierende Leichtbauplatte (1) eine Dicke von 12 bis 35 mm, vorzugsweise von 16 bis 30 mm, weiterhin vorzugsweise von 18 bis 26 mm aufweist.

19. Verbundplatte (10) nach einem der Ansprüche 14 bis 18,
**dadurch gekennzeichnet, dass** die schallabsorbierende Leichtbauplatte (1) mindestens einen Leichtfüllstoff, vorzugsweise eine Leichtfüllstoffkombination aus Leichtfüllstoffen unterschiedlicher Partikelgrößenfraktionen, sowie mindestens ein organisches Polymerbindemittel enthält.

## Geänderte Patentansprüche

### Geänderte Patentansprüche gemäss Regel 137(2) EPÜ.

1. Verfahren zur Herstellung einer akustisch wirksamen Verbundplatte (10) für den Innenausbau, umfassend eine schallabsorbierende Leichtbauplatte (1) und eine strömungsdichte Lage (2), wobei die strömungsdichte Lage (2) in mindestens einem Bereich (A) unmittelbar und in mindestens einem Bereich (B) mittelbar über eine Zwischenlage (3) mit der schallabsorbierenden Leichtbauplatte (1) verbunden wird,
**dadurch gekennzeichnet, dass** die strömungsdichte Lage (2) aus einem faserhaltigen Vlies, Gewebe, Gewirke oder Gelege ausgebildet wird, das einen spezifischen Strömungswiderstand nach DIN EN ISO 9053-1 über 1000 Pa*s/m, vorzugsweise über 2000 Pa*s/m, weiterhin vorzugsweise über 5000 Pa*s/m, aufweist und die Zwischenlage (3) aus einem faserhaltigen Vlies, Gewebe, Gewirke oder Gelege ausgebildet wird, das einen spezifischen Strömungswiderstand nach DIN EN ISO 9053-1 kleiner 200 Pa*s/m, vorzugsweise kleiner 100 Pa*s/m, weiterhin vorzugsweise kleiner 50 Pa*s/m aufweist.

2. Verfahren nach Anspruch 1,
**dadurch gekennzeichnet, dass** die Zwischenlage (3) beabstandet zu mindestens einem Randbereich der strömungsdichten Lage (2) angeordnet wird.

3. Verfahren nach Anspruch 1 oder 2,
**dadurch gekennzeichnet, dass** 50 bis 80%, vorzugsweise 60 bis 75%, weiterhin vorzugsweise 70%, der Gesamtfläche der strömungsdichten Lage (2) unmittelbar mit der schallabsorbierenden Leichtbauplatte (1) verbunden werden.

4. Verfahren nach einem der vorhergehenden Ansprüche,
**dadurch gekennzeichnet, dass** die Zwischenlage (3) aus einem faserhaltigen Vlies, Gewebe, Gewirke oder Gelege ausgebildet wird, das
a) eine Dicke nach DIN EN ISO 9073-2 von mindestens 0,2 mm, vorzugsweise mindestens 0,5 mm, weiterhin vorzugsweise mindestens 1,0 mm, und/oder
b) ein Flächengewicht nach DIN EN 12127 von 20 bis 200 g/m², vorzugsweise von 30 bis 160 g/m², weiterhin vorzugsweise von 40 bis 140 g/m²,
aufweist.

5. Verfahren nach einem der vorhergehenden Ansprüche,
**dadurch gekennzeichnet, dass** die strömungsdichte Lage (2) aus einem faserhaltigen Vlies, Gewebe, Gewirke oder Gelege ausgebildet wird, das
a) eine Dicke nach DIN EN ISO 9073-2 von 0,2 bis 1,2 mm, vorzugsweise von 0,3 bis 0,8 mm, weiterhin vorzugsweise von 0,4 bis 0,6 mm, und/oder
b) ein Flächengewicht nach DIN EN 12127 von 200 bis 600 g/m², vorzugsweise von 220 bis 500 g/m², weiterhin vorzugsweise von 240 bis 450 g/m²,
aufweist.

6. Verfahren nach einem der vorhergehenden Ansprüche,
**dadurch gekennzeichnet, dass** die Zwischenlage (3) und die strömungsdichte Lage (2) im Verbund oder nacheinander auf die schallabsorbierende Leichtbauplatte (1) aufgebracht, vorzugsweise aufgeklebt oder auflaminiert, werden.

7. Verfahren nach einem der Ansprüche 1 bis 5,
**dadurch gekennzeichnet, dass** die Zwischenlage (3) und die strömungsdichte Lage (2) bereits bei der Herstellung der schallabsorbierenden Leichtbauplatte (1) mit dieser verbunden, vorzugsweise verpresst, werden.

8. Verfahren nach einem der vorhergehenden Ansprüche,
**dadurch gekennzeichnet, dass** die schallabsorbierende Leichtbauplatte (1) aus einer Zusammensetzung hergestellt wird, die mindestens einen Leichtfüllstoff und mindestens ein organisches Polymerbindemittel enthält.

9. Verfahren nach Anspruch 8,
**dadurch gekennzeichnet, dass** die schallabsorbierende Leichtbauplatte (1) aus einer Zusammensetzung hergestellt wird, die eine Leichtfiillstoffkombination aus Leichtfüllstoffen unterschiedlicher Partikelgrößenfraktionen enthält, wobei vorzugsweise die Leichtfiillstoffkombination mindestens drei Partikelgrößenfraktionen enthält, umfassend
- eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
- eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
- eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm.

10. Verfahren nach Anspruch 9,
**dadurch gekennzeichnet, dass** die Partikelgröße nach DIN EN 933-1 einer Fraktion (B, C) um mindestens den Faktor 0,5 kleiner als die der nächstgröberen Fraktion (A, B) ist.

11. Verfahren nach Anspruch 9 oder 10,
**dadurch gekennzeichnet, dass** die schallabsorbierende Leichtbauplatte (1) aus einer Zusammensetzung hergestellt wird, die
- 30-60 Gew.-%, vorzugsweise 32-56 Gew.-%, weiterhin vorzugsweise 34-50 Gew.-% Leichtfüllstoffe der ersten Fraktion (A),
- 20-50 Gew.-%, vorzugsweise 24-45 Gew.-%, weiterhin vorzugsweise 26-40 Gew.-% der zweiten Fraktion (B) und
- 4-16 Gew.-%, vorzugsweise 6-14 Gew.-%, weiterhin vorzugsweise 8-12 Gew.-% der dritten Fraktion (C)
jeweils bezogen auf das Gesamtgewicht der Ausgangsstoffe enthält.

12. Verfahren nach einem der Ansprüche 8 bis 11,
**dadurch gekennzeichnet, dass** die schallabsorbierende Leichtbauplatte (1) aus einer Zusammensetzung hergestellt wird, die ein Hydrophobierungsmittel, beispielsweise aus der Gruppe der Silikonharze, Polysiloxane, Fettsäuren, Fettsäurederivate, Wachse und/oder Paraffine, enthält.

13. Verfahren nach einem der Ansprüche 8 bis 12,
**dadurch gekennzeichnet, dass** die schallabsorbierende Leichtbauplatte (1) bei ihrer Herstellung ein- oder beidseitig kaschiert wird.

14. Akustisch wirksame Verbundplatte (10) für den Innenausbau, umfassend eine schallabsorbierende Leichtbauplatte (1) und eine strömungsdichte Lage (2), wobei die strömungsdichte Lage (2) in mindestens einem Bereich (A) unmittelbar und in mindestens einem Bereich (B) mittelbar über eine Zwischenlage (3) mit der schallabsorbierenden Leichtbauplatte (1) verbunden ist,
**dadurch gekennzeichnet, dass** die strömungsdichte Lage (2) aus einem faserhaltigen Vlies, Gewebe, Gewirke oder Gelege ausgebildet ist, das einen spezifischen Strömungswiderstand nach DIN EN ISO 9053-1 über 1000 Pa*s/m, vorzugsweise über 2000 Pa*s/m, weiterhin vorzugsweise über 5000 Pa*s/m, aufweist, und die Zwischenlage (3) aus einem faserhaltigen Vlies, Gewebe, Gewirke oder Gelege, ausgebildet ist, das einen spezifischen Strömungswiderstand nach DIN EN ISO 9053-1 kleiner 200 Pa*s/m, vorzugsweise kleiner 100 Pa*s/m, weiterhin vorzugsweise kleiner 50 Pa*s/m, aufweist.

15. Verbundplatte (10) nach Anspruch 14,
**dadurch gekennzeichnet, dass** die Zwischenlage (3) beabstandet zu mindestens einem Randbereich der strömungsdichten Lage (2) angeordnet ist.

16. Verbundplatte (10) nach Anspruch 14 oder 15,
**dadurch gekennzeichnet, dass** die Zwischenlage (3) aus einem faserhaltigen Vlies, Gewebe, Gewirke oder Gelege, ausgebildet ist, das
a) eine Dicke nach DIN EN ISO 9073-2 von mindestens 0,2 mm, vorzugsweise mindestens 0,5 mm, weiterhin vorzugsweise mindestens 1,0 mm, und/oder
b) ein Flächengewicht nach DIN EN 12127 von 20 bis 200 g/m², vorzugsweise von 30 bis 160 g/m², weiterhin vorzugsweise von 40 bis 140 g/m²,
aufweist.

17. Verbundplatte (10) nach einem der Ansprüche 14 bis 16,
**dadurch gekennzeichnet, dass** die strömungsdichte Lage (2) aus einem faserhaltigen Vlies, Gewebe, Gewirke oder Gelege ausgebildet ist, das
a) eine Dicke nach DIN EN ISO 9073-2 von 0,2 bis 1,2 mm, vorzugsweise von 0,3 bis 0,8 mm, weiterhin vorzugsweise von 0,4 bis 0,6 mm, und/oder
b) ein Flächengewicht nach DIN EN 12127 von 200 bis 600 g/m², vorzugsweise von 220 bis 500 g/m², weiterhin vorzugsweise von 240 bis 450 g/m²,
aufweist.

18. Verbundplatte (10) nach einem der Ansprüche 14 bis 17,
**dadurch gekennzeichnet, dass** die schallabsorbierende Leichtbauplatte (1) eine Dicke von 12 bis 35 mm, vorzugsweise von 16 bis 30 mm, weiterhin vorzugsweise von 18 bis 26 mm aufweist.

19. Verbundplatte (10) nach einem der Ansprüche 14 bis 18,
**dadurch gekennzeichnet, dass** die schallabsorbierende Leichtbauplatte (1) mindestens einen Leichtfüllstoff, vorzugsweise eine Leichtfüllstoffkombination aus Leichtfüllstoffen unterschiedlicher Partikelgrößenfraktionen, sowie mindestens ein organisches Polymerbindemittel enthält.
